# EUROPÄISCHE PATENTANMELDUNG

(11) **EP 3 985 848 A1**
(43) Veröffentlichungstag der Anmeldung: **20.04.2022**
(21) Anmeldenummer: 20202594.6
(22) Anmeldetag: 19.10.2020
(51) Int. Cl.: H02K 21/16, H02K 29/03

(54) **DYNAMOELEKTRISCHE ROTATORISCHE MASCHINE**

(71) Anmelder: Siemens Aktiengesellschaft, 80333 München (DE)
(72) Erfinder: Potoradi, Detlef, 97616 Bad Neustadt/Saale (Mühlbach) (DE)

(57) **Zusammenfassung**

Die Erfindung betrifft eine dynamoelektrische rotatorische Maschine (14), insbesondere Servomotor, aufweisend: einen Stator (8), wobei der Stator (8) eine Bruchlockwicklung (12) mit einer Lochzahl q = 1/2 aufweist; einen Rotor (9), wobei der Rotor (9) Permanentmagnete (11) aufweist, wobei der Rotor (9) eine Polbedeckung (α_{M}) > 85% aufweist, wobei die Permanentmagnete (11) eine Remanenz Br > 1,25 T aufweisen. Die Erfindung betrifft ferner ein Antriebssystem (16) sowie einen Roboter (1).

## Beschreibung

Die Erfindung betrifft eine dynamoelektrische rotatorische Maschine.

Um eine möglichst geringe Drehmomentwelligkeit zu erreichen, werden Servomotoren hinsichtlich einer Drehmomentdichte, also einem Drehmoment pro Volumen, nicht optimal ausgenutzt. Es werden bei einer Auslegung des Servomotors verschiedene Maßnahmen getroffen, die einer Reduktion einer Drehmomentwelligkeit und einer Reduktion eines Nutrastmoments dienen.

Dies wirkt sich jedoch nachteilig auf eine optimale Ausnutzung aus.

Der Erfindung liegt die Aufgabe zugrunde, einen Servomotor dahingehend zu verbessern.

Die Lösung der Aufgabe gelingt durch Anspruch 1, d. h. eine dynamoelektrische rotatorische Maschine, insbesondere Servomotor, aufweisend:
- einen Stator, wobei der Stator eine Bruchlockwicklung mit einer Lochzahl q = 1/2 aufweist,
- einen Rotor, wobei der Rotor Permanentmagnete aufweist, wobei der Rotor eine Polbedeckung > 85% aufweist, wobei die Permanentmagnete eine Remanenz Br > 1,25 T aufweisen.

Die Maschine ist vorteilhaft nach Gesichtspunkten ausgelegt, die eine optimale Ausnutzung gewährleisten. Eine erhöhte Drehmomentwelligkeit wird hierbei nicht berücksichtigt.

Dies bietet den Vorteil, dass die Maschine leicht, kompakt, insbesondere besonders kurz, ist. Zudem ist die Maschine kostengünstig.

Für die Lochzahl gilt vorteilhaft: q = n1 / 2·p · m, wobei n1 eine Nutzahl, p eine Polpaarzahl und m eine Stranganzahl ist.

Die Lochzahl q = 1/2 ermöglicht ein symmetrisches Wicklungssystem, welches keine bzw. nur eine geringe Schwingungsanfälligkeit aufweist.

Besonders gut ist die Remanenz Br>1,25 aufgrund eines vorteilhaften Polradfelds. Es kann ein hohes Drehmoment aus einem relativ geringen Volumen erzeugt werden.

In einer vorteilhaften Ausführung ist ein Luftspalt zwischen einer Statorbohrung und einer Oberseite wenigstens eines Permanentmagneten, vorzugsweise aller Permanentmagnete, wenigstens im Wesentlichen konstant.

Vorteilhaft werden Schalenmagnete bzw. schalenförmige Magnete bzw. Magnet-Ringsegmente mit gleicher Dicke eingesetzt.

In einer vorteilhaften Ausführung gilt für ein Verhältnis h_{M}/δ zwischen einer Dicke wenigstens eines Permanentmagneten und dem Luftspalt h_{M}/δ ≥ 4.

Besonders vorteilhaft gilt hierfür: 4 ≤ h_{M}/δ ≤ 5.

Dies ist vorteilhaft, denn je größer das Verhältnis h_{M}/δ ist, desto höher ist ein Luftspaltfeld und somit das Drehmoment.

Dies gewährleistet einen leistungsstarken Antrieb, der schwere Lasten heben kann und gleichzeitig Bewegungsaufgaben hochdynamisch und präzise ausführt.

In einer vorteilhaften Ausführung sind die Permanentmagnete wenigstens im Wesentlichen parallel zu einer Rotorachse angeordnet.

Die Permanentmagnete sind somit nicht geschrägt bzw. gestaffelt angeordnet.

Auf diese Weise wird ein hoher Wirkungsgrad der Maschine erreicht.

In einer vorteilhaften Ausführung gilt für eine Nutzschlitzbreite bs und eine Nutbreite b_{N} des Stators: bs ≥ 0,3 · b_{N}

Dies bietet den Vorteil, dass eine Sättigung von Zähnen und eines Statorjochs durch ein Ankerquerfeld geringer ist.

Die Lösung der oben gestellten Aufgabe gelingt ferner durch Anspruch 6, d. h ein Antriebssystem, insbesondere zur Bewegung einer Roboterachse, aufweisend:
- eine derartige dynamoelektrische rotatorische Maschine,
- einen Umrichter, wobei eine Drehmomentwelligkeit der dynamoelektrischen rotatorischen Maschine regelungstechnisch reduzierbar oder kompensierbar ist.

Der Umrichter umfasst hierzu vorteilhaft eine Funktion zur regelungstechnischen Drehmomentwelligkeitsreduktion und/oder zur regelungstechnischen Drehmomentwelligkeitskompensation.

In einer vorteilhaften Ausführung ist mittels eines Kompensationsstroms wenigstens eine harmonische Schwingung der Drehmomentwelligkeit reduzierbar oder kompensierbar.

Um die Drehmomentwelligkeit auf ein gewünschtes Maß zu reduzieren bzw. zu kompensieren, werden vorteilhaft durch eine Strom-Vorsteuerung zu den einzelnen Harmonischen in der Drehmomentwelligkeit passende Kompensationsströme, insbesondere bezüglich einer Amplitude und/oder Phase, erzeugt und eingespeist.

Die Lösung der oben gestellten Aufgabe gelingt ferner durch Anspruch 8, d. h. einen Roboter, aufweisend ein derartiges Antriebssystem.

Servomotoren eignen sich aufgrund ihrer kompakten Bauweise für Robotik-Anwendungen besonders gut. Zudem ermöglichen sie flüssige und präzise Bewegungsabläufe.

Dies ist insbesondere bei kollaborativen Robotern von Vorteil.

Die Erfindung eignet sich jedoch auch für andere Anwendungen, insbesondere für Anwendungen, bei welchen Präzision wichtig ist. Hierzu zählen mitunter Montage, Kleben, Dosieren, Maschinenbeschickung, Materialumschlag, Dispensieren, Endbearbeitung, Qualitätsprüfung, Schweißen und Materialentfernung.

Im Folgenden wird die Erfindung anhand der in den Figuren dargestellten Ausführungsbeispielen näher beschrieben und erläutert. Es zeigen:
- FIG 1: einen Stator und einen Rotor einer dynamoelektrischen Maschine,
- FIG 2: eine weitere Ausführung einer dynamoelektrischen rotatorischen Maschine,
- FIG 3: die dynamoelektrische rotatorische Maschine,
- FIG 4: den Antrieb,
- FIG 5: einen Roboter 1, insbesondere einen kollaborativen Roboter,
- FIG 6: ein beispielhaftes Drehmomentwelligkeitsspektrum eines Servomotors.

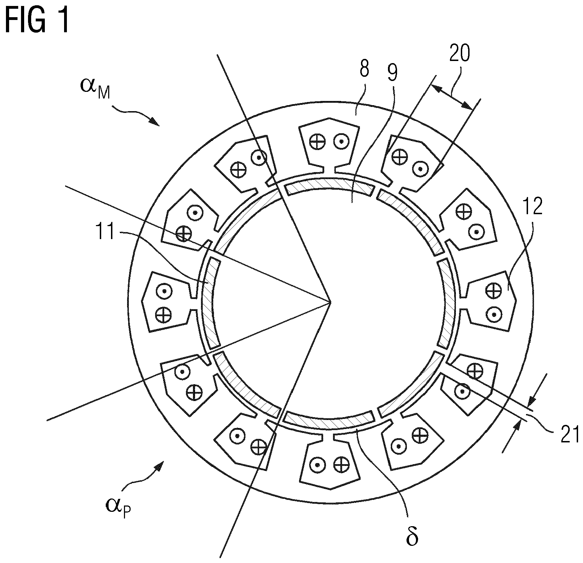

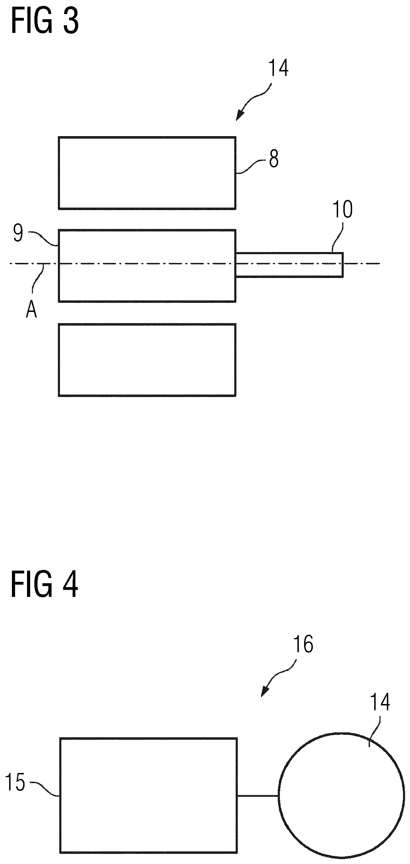

FIG 1 zeigt einen Stator 8 und einen Rotor 9 einer dynamoelektrischen Maschine 14 (siehe FIG 3).

Der Stator 8 umfasst eine Wicklung 12, welche als Bruchlochwicklung mit einer Lochzahl q = 1/2 ausgebildet ist. Der Stator 8 umfasst eine Mehrzahl an Nuten mit einer Nutbreite b_{N} 20 und einer Nutschlitzbreite bs 21. Die Nutbreite 20 ist vorteilhaft konstant. Für die Nutschlitzbreite 21 gilt vorteilhaft bs ≥ 0,3 · b_{N}.

Die Figur zeigt zudem den Rotor 9, welcher mit Permanentmagneten 11 bestückt ist. Die dargestellte dynamoelektrische Maschine umfasst zwölf Nuten und acht Pole.

Es gilt hierbei: q = n1 / (2p · m) = 1/2,
wobei n1 eine Anzahl von zwölf Nuten, 2p eine Anzahl von acht Polen und m eine Anzahl von drei Strängen kennzeichnet.

Ein Pol der Maschine ist in der Figur mit α_{P} gekennzeichnet. Ein Pol wird durch einen Permanentmagneten 11 gebildet. Vorteilhaft ist eine Polbedeckung α_{M} > 85%.

Die Figur zeigt schalenförmige Permanentmagnete 11. Es ist jedoch auch denkbar, dass die Permanentmagnete 11 als Plättchenmagnete, Ringmagnete oder randabgesenkte Schalenmagnete ausgebildet sind.

Zwischen Rotor 9 und Stator 8 befindet sich ein Luftspalt δ, wobei vorteilhaft für ein Verhältnis h_{M}/δ zwischen einer Dicke wenigstens eines Permanentmagneten und dem Luftspalt h_{M}/δ ≥ 4 gilt.

Die Figur ist nur als Beispiel für q = 1/2 zu betrachten. Es gibt viele weitere mögliche Varianten, z.B. n1 = 9, p = 3.

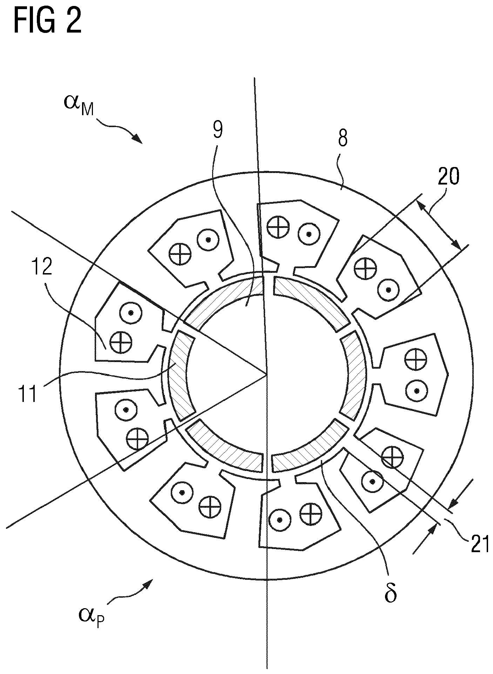

FIG 2 zeigt eine weitere Ausführung einer dynamoelektrischen rotatorischen Maschine 14. Diese umfasst neun Nuten und sechs Pole. Auch hier liegt q = 1/2 vor.

FIG 3 zeigt die dynamoelektrische rotatorische Maschine 14, aufweisend, den Stator 8, den Rotor 9 sowie eine Welle 10. Der Rotor 9 rotiert um eine Rotorachse A.

FIG 4 zeigt einen Antrieb 16. Der Antrieb 16 umfasst einen Umrichter 15 sowie die dynamoelektrische rotatorische Maschine 14.

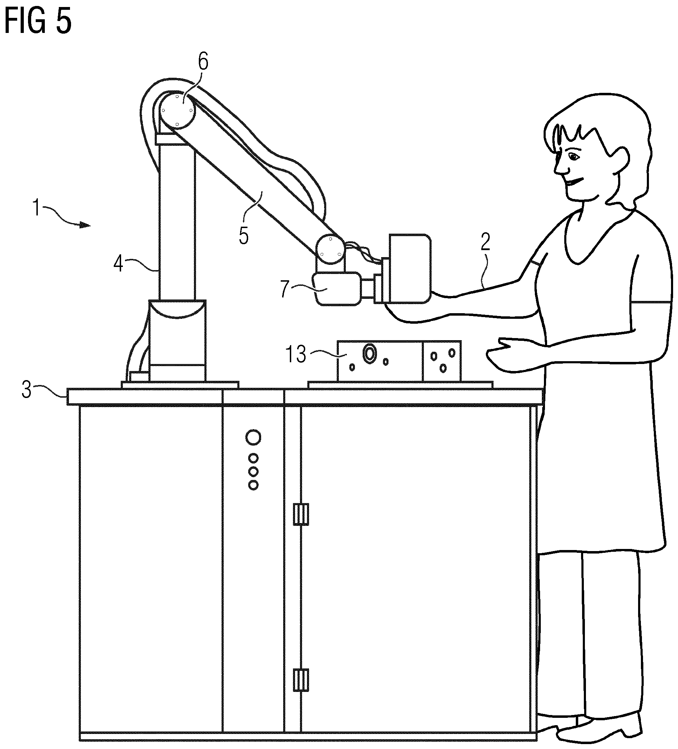

FIG 5 zeigt einen Roboter 1, insbesondere einen kollaborativen Roboter.

Der Roboter 1 ist besonders gut für eine Zusammenarbeit mit einer Person 2 geeignet. Der Roboter umfasst einen Oberarm 4 sowie einen Unterarm 5. Der Oberarm 4 und der Unterarm 5 sind mittels eines Gelenks 6 miteinander verbunden.

Der Roboter 1 umfasst ein Werkzeug 7, mit welchem ein Werkstück 13, welches in der Figur auf einen Arbeitstisch 3 liegt, bearbeitet werden kann.

Die dynamoelektrische rotatorische Maschine 14 bzw. der gesamte Antrieb 16 eignet sich besonders gut als Antrieb zur Ermöglichung einer Relativbewegung von Unterarm 5 zu Oberarm 4. Der Antrieb ermöglicht flüssige und präzise Bewegungsabläufe und somit eine optimale Bearbeitung des Werkstücks 13.

Vorteilhaft ist der Antrieb 16 bzw. die Maschine 14 im Gelenk 6 angeordnet.

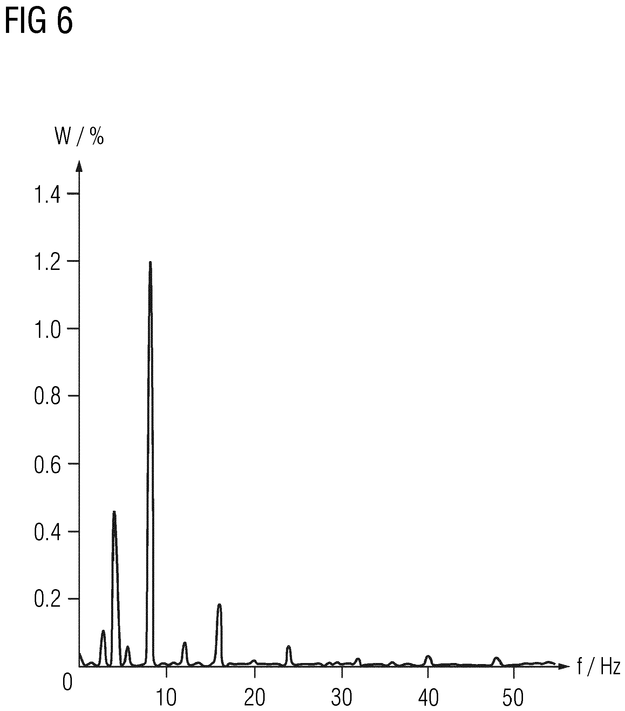

FIG 6 zeigt ein beispielhaftes Drehmomentwelligkeitsspektrum eines Servomotors.

Ein Drehmoment von dynamoelektrischen Maschinen, insbesondere Servomotoren, ist zeitlich nicht konstant. Einem Nutzmoment sind Pendelmomente überlagert. Dies führt zu einer sogenannten Drehmomentwelligkeit.

Es gibt mehrere Pendelmomente mit unterschiedlichen Frequenzen, Phasenlagen und Amplituden. Dies zeigt FIG 6, wobei auf der y-Achse eine Welligkeit W aufgetragen ist und auf der x-Achse eine Frequenz.

Bei einer Drehmomentwelligkeitskompensation werden zusätzlich zu dem Strom, der das Nutzmoment erzeugt, weitere Ströme vom Umrichter in die Maschine eingespeist. Diese Ströme sind, insbesondere bezüglich Amplitude, Frequenz und/oder Phasenlage dergestalt, dass sie die einzelnen Drehmomentwelligkeitskomponenten der Welligkeit W reduzieren oder sogar kompensieren.

Das heißt in anderen Worten, dass vorteilhaft jede einzelne zusätzlich eingespeiste Stromkomponente in der Maschine ein Drehmoment erzeugt, das einer dargestellten Drehmomentwelligkeitsspitze entgegenwirkt.

## Patentansprüche

1. Dynamoelektrische rotatorische Maschine (14), insbesondere Servomotor, aufweisend:
- einen Stator (8), wobei der Stator (8) eine Bruchlockwicklung (12) mit einer Lochzahl q = 1/2 aufweist,
- einen Rotor (9), wobei der Rotor (9) Permanentmagnete (11) aufweist, wobei der Rotor (9) eine Polbedeckung (α_{M}) > 85% aufweist, wobei die Permanentmagnete (11) eine Remanenz Br > 1,25 T aufweisen.

2. Dynamoelektrische rotatorische Maschine (14) nach Anspruch 1, wobei ein Luftspalt (δ) zwischen einer Statorbohrung und einer Oberseite wenigstens eines Permanentmagneten (11), vorzugsweise aller Permanentmagnete (11), wenigstens im Wesentlichen konstant ist.

3. Dynamoelektrische rotatorische Maschine (14) nach einem der vorhergehenden Ansprüche, wobei für ein Verhältnis h_{M}/δ zwischen einer Dicke wenigstens eines Permanentmagneten (11) und dem Luftspalt (δ) h_{M}/δ ≥ 4 gilt.

4. Dynamoelektrische rotatorische Maschine (14) nach einem der vorhergehenden Ansprüche, wobei die Permanentmagnete (11) wenigstens im Wesentlichen parallel zu einer Rotorachse (A) angeordnet sind.

5. Dynamoelektrische rotatorische Maschine (14) nach einem der vorhergehenden Ansprüche, wobei für eine Nutzschlitzbreite (bs) und eine Nutbreite (b_{N}) des Stators (8) gilt: bs ≥ 0,3 · b_{N}

6. Antriebssystem (16), insbesondere zur Bewegung einer Roboterachse (4, 5), aufweisend:
- eine dynamoelektrische rotatorische Maschine (14) nach einem der Ansprüche 1 bis 5,
- einen Umrichter (15), wobei eine Drehmomentwelligkeit der dynamoelektrischen rotatorischen Maschine (14) regelungstechnisch reduzierbar oder kompensierbar ist.

7. Antriebssystem (16), wobei mittels eines Kompensationsstroms wenigstens eine harmonische Schwingung der Drehmomentwelligkeit reduzierbar ist oder kompensierbar ist.

8. Roboter (1), aufweisend ein Antriebssystem (16) nach einem der Ansprüche 6 oder 7.
